# EUROPEAN PATENT APPLICATION

(11) **EP 3 950 503 A1**
(43) Date of publication of application: **09.02.2022**
(21) Application number: 20315378.8
(22) Date of filing: 05.08.2020
(51) Int. Cl.: B64D 11/06, B60N 2/24, B61D 33/00

(54) **PARTITION FOR SEAT OF MASS TRANSPORTATION VEHICLE**

(71) Applicant: UUDS AERO, 95700 Roissy en France (FR)
(72) Inventor: Ehrhard, Julian, 60300 Senlis (FR)
(74) Representative: BCF Global

(57) **Abstract**

A partition for a seat of a mass transportation vehicle is disclosed. The seat has a seat bottom, and a backrest connected to the seat bottom. The partition has a frame; a cover made of flexible material, the cover being supported by the frame, the frame being disposed at least in part in the cover; and at least one toolless fastener provided on the cover, the at least one toolless fastener being adapted for selectively fastening the partition to an upper portion of a lateral side of the backrest. A seat assembly having a seat and the partition fastened to the seat is also disclosed.

## Description

### CROSS-REFERENCE

None

### FIELD OF TECHNOLOGY

The present technology relates to partitions for seats of mass transportation vehicles.

### BACKGROUND

Mass transportation vehicles, such as aircraft, trains and buses have seat arrangements which attempt to maximize the number of passengers. With some exceptions, such as in first class or business class in aircraft, this results in the seats, and therefore the passengers, being close to each other.

Such proximity offers little privacy to the passengers. Additionally, this proximity offers little protection for a passenger from infectious aerosols and spray droplets that may be expelled from the mouths of nearby passengers sneezing or coughing.

One known solution consists in providing fixed rigid partitions between adjacent seats. However, mounting such partitions can be difficult and time consuming. Additionally, since the partitions have to be cleaned and decontaminated at their fixed locations, thoroughly cleaning and disinfecting the surfaces of the partitions can be difficult.

There is therefore a desire for a device for a seat of a mass transportation vehicle that can offer the passenger occupying the seat some privacy and some level of protection from infectious aerosols and spray droplets that may be expelled from the mouths of other passengers.

### SUMMARY

It is an object of the present technology to ameliorate at least some of the inconveniences present in the prior art.

According to one aspect of the present technology, there is provided a partition for a seat of a mass transportation vehicle. The seat has a seat bottom, and a backrest connected to the seat bottom. The partition has a frame; a cover made of flexible material, the cover being supported by the frame, the frame being disposed at least in part in the cover; and at least one toolless fastener provided on the cover, the at least one toolless fastener being adapted for selectively fastening the partition to an upper portion of a lateral side of the backrest.

In some embodiments, the at least one toolless fastener is at least two toolless fasteners disposed generally in a line, the line being generally vertical.

In some embodiments, the at least two toolless fasteners are three toolless fasteners. The three toolless fasteners are a lower fastener, a central fastener disposed above the lower fastener, and an upper fastener disposed above the central fastener. Only the lower and central fasteners are used for fastening the partition to the upper portion of the lateral side of the backrest of the seat.

In some embodiments, the frame forms a closed perimeter.

In some embodiments, the at least one toolless fastener is located within the closed perimeter defined by the frame.

In some embodiments, the frame has at least one frame member connected to at least one elbow fitting.

In some embodiments, the at least one frame member comprises a first frame member and a second frame member. At least the second frame member of the first and second frame members is flexible. The at least one elbow fitting has a first elbow fitting and a second elbow fitting. The first flexible frame member extends generally vertically. The first elbow fitting is connected to an upper end of the first flexible frame member. The second elbow fitting is connected to a lower end of the first flexible frame member. The second flexible frame member is curved, has a first end connected to the first elbow fitting and a second end connected to the second elbow fitting, and extends forward of the first flexible member.

In some embodiments, the at least one toolless fastener is selected from: a snap fastener element adapted for fastening to a corresponding snap fastener element provided on the upper portion of the lateral side of the backrest of the seat; and a touch fastener element adapted for fastening to a corresponding touch fastener element provided on the upper portion of the lateral side of the backrest of the seat.

In some embodiments, the cover is a slipcover defined by an outer cover wall and an inner cover wall. The frame is received inside the slipcover between the outer and inner cover walls.

In some embodiments, the cover has a cover wall and at least one sleeve along at least a portion of a periphery of the cover wall. The frame is received at least in part inside the at least one sleeve.

In some embodiments, a height of the partition at a rear edge of the cover is smaller than a height of portions of the partition disposed forward of the rear edge.

In some embodiments, the cover is made of medical grade non-woven textile.

In some embodiments, a loop is connected to a rear portion of the cover for pulling the partition off of the seat when removing the partition from the seat.

According to another aspect of the present technology, there is provided a seat assembly having a seat and the partition according to one or more of the above aspect and embodiments. The at least one toolless fastener is at least one first toolless fastener. The seat has a seat bottom, a backrest connected to the seat bottom, and at least one second toolless fastener connected to an upper portion of a lateral side of the backrest. At least one of the at least one first toolless fastener is selectively fastened to the at least one second toolless fastener. The partition extends forward of the backrest.

In some embodiments, the partition is configured for being fastened to either one of a left side of the seat and a right side of the seat.

Embodiments of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of embodiments of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 is a perspective view taken from a front, left side of a passenger seat of a mass transportation vehicle with a partition according to the present technology mounted thereto and with a passenger sitting in the passenger seat;
Figure 2 is a close-up view of the passenger seat of Figure 1 with the partition removed;
Figure 3 is a left side elevation view of the partition of Figure 1, with a frame of the partition shown in dotted lines;
Figure 4 is an exploded view of the frame of the partition of Figure 3;
Figure 5 is a right side elevation view of an alternative embodiment of the partition of Figure 3;
Figure 6 is a left side elevation view of another alternative embodiment of the partition of Figure 3; and
Figure 7 is a left side elevation view of another alternative embodiment of the partition of Figure 3.

### DETAILED DESCRIPTION

Various embodiments of partitions according to the present technology will be described in use with a passenger seat 12 of an aircraft. It is contemplated that the present technology could be used with seats of other types of mass transportation vehicles, such as, but not limited to, trains and buses.

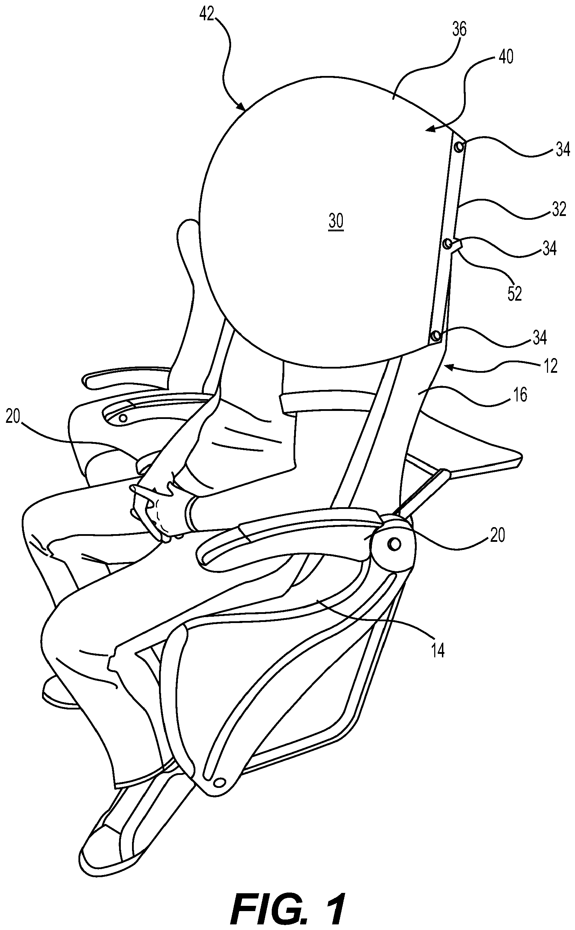

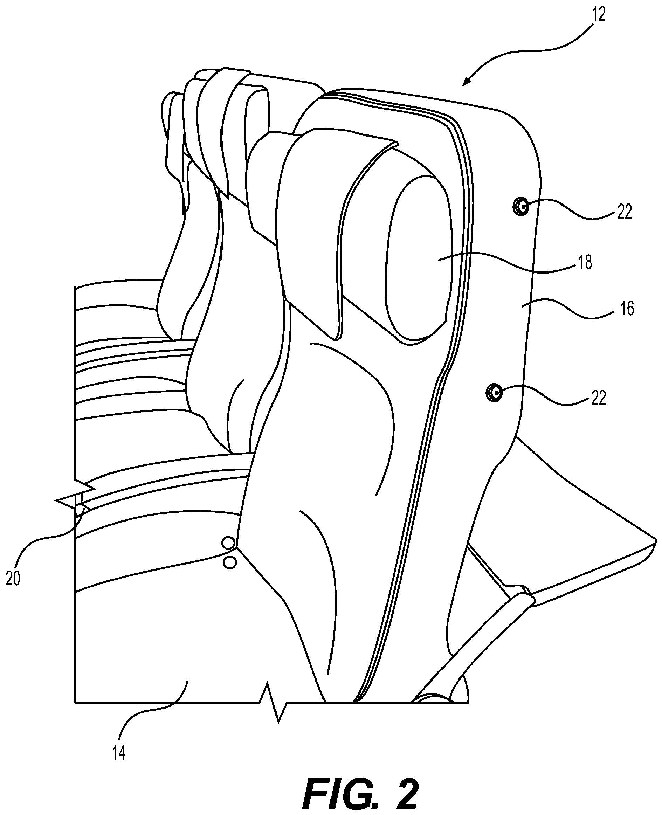

With reference to Figures 1 and 2, the passenger seat 12 has a seat bottom 14, a backrest 16 connected to the seat bottom 14, a headrest 18 and armrests 20. The backrest 16 can partially recline. The headrest 18 is connected to the backrest 16 and is disposed in front of the backrest 16. A connection between the headrest 18 and the backrest 16 permits adjustment of a height of the headrest 18 in order to accommodate passengers of different heights. It is contemplated that the connection between headrest 18 and the backrest 16 could be fixed. It is contemplated that in some embodiments the armrests 20 could be omitted and/or that the backrest 18 could not recline.

In Figure 1, a partition 30 is mounted to passenger seat 12 to form a seat assembly. The partition 30 is non-permanently mounted to the seat 12 so as to be easily installed on and removed from the passenger seat 12. The partition 30 can be mounted onto an aisle seat so as to partially separate the aisle seat from the aisle as shown in Figure 1, or between two adjacent seats so as to partially separate the seats from each other. In Figure 1, the passenger seat 12 has the partition 30 connected on a left side thereof. It is contemplated that the passenger seat 12 could have the partition connected on a right side thereof. It is also contemplated that the passenger seat 12 could have one partition 30 connected on its left side and one partition 30 connected on its right side. As will be described in more detail below, the partition 30 is configured for being fastened to either one of the left side and the right side of the passenger seat 12.

Once the partition 30 is mounted to the passenger seat 12 as shown, the partition 30 extends forward of the backrest 16 of the seat 12 as shown. In the present embodiment, the partition 30 is sized and is connected at a position on the backrest 16 such that the partition 30 extends vertically higher than the top of the backrest 16. In the present embodiment, a rear edge 32 of the partition 30 extends above the top of the backrest 16 by about 10 centimeters, but other dimensions are contemplated. Also, a lower edge of the partition 30 is vertically higher than the left armrest 20, thus creating a space between the partition 30 and the left armrest 20. This space allows a passenger sitting in the seat 12 to comfortably use the left armrest 20. Once mounted, the partition 30 will move with the backrest 16 when the backrest 16 is inclined. Once mounted, the partition 30 acts as a screen that provides some privacy to the passenger sitting in the seat 12 and also at least partially shields the passenger sitting in the seat 12 from infectious aerosols and spray droplets that may be expelled from the mouths of nearby passengers sneezing or coughing.

Also, since the partition 30 is not permanently connected to the seat 12, as will be described in more detail below, the partition 30 can be quickly and easily installed onto and removed from the seat 12. Also, since the partition 30 takes little room and can be stacked with other partitions 30, stacks of partitions 30 can conveniently be removed from the vehicle and be sent for cleaning, disposal and/or recycling.

As can be seen in Figure 2, two toolless fasteners 22 are connected to an upper portion of the left lateral side of the passenger seat 12. The two toolless fasteners 22 are selectively fastened to two of three toolless fasteners 34 provided on the partition 30 for selectively fastening the partition 30 to the upper portion of the left lateral side of the passenger seat 12. Toolless fasteners, such as the toolless fasteners 22, 34, are fasteners that are designed to be fastened and unfastened without the use of tools as their name suggests. In the present embodiment, the toolless fasteners 22 are male snap fastener elements 22 and the toolless fasteners 34 are female snap fastener elements 34. It is contemplated that the toolless fasteners 22 could be female snap fastener elements and the toolless fasteners 34 could be male snap fastener elements. It is also contemplated that other types of toolless fasteners could be used. For example, the toolless fasteners 22 could be touch fastener elements, such as one of a hook side and a loop side of a hook and loop fastener, and the toolless fasteners 34 could be corresponding touch fastener elements, such as another one of the hook side and a loop side of the hook and loop fastener. Examples of hook and loop fasteners are sold under the brand Velcro^{™}. Other examples of toolless fasteners will be described below in the detailed description of the partition 30. It is contemplated that two toolless fasteners (not shown) could be connected to an upper portion of the right lateral side of the passenger seat 12 in addition to or instead of the toolless fasteners 22 to permit connection of a partition 30 to the right side of the passenger seat 12.

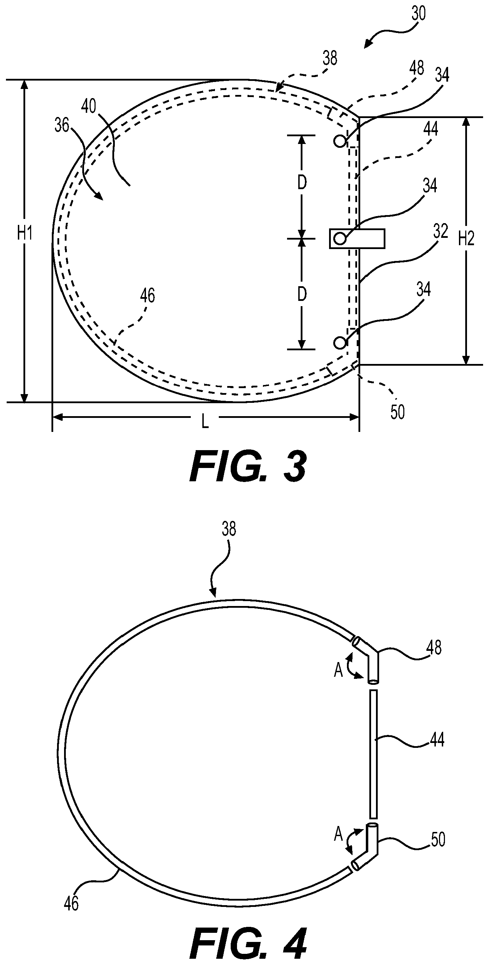

With reference to Figure 3 and 4, the partition 30 will be described in more detail. The partition 30 will be described herein with respect to its orientation when fastened to the left side of the passenger seat 12 (i.e. as shown in Figure 1). It should be understood that when fastened to the right side of the passenger seat 12, the partition 30 would appear as a mirror image of the partition 30 as illustrated in Figure 3.

The partition 30 has a cover 36, a frame 38 and the toolless fasteners 34. In the present embodiment, the cover 36 is a slipcover 36. The slipcover 36 has an outer cover wall 40 and an inner cover wall 42 (Figure 1, on the side of the partition 30 facing the passenger). The outer and inner cover walls 42 are sewn, welded, glued, or otherwise connected to each other along their peripheries except along the rear edge 32 to define an opening through which the frame 38 can be inserted inside the slipcover 36. It is contemplated that some portions of the outer and inner cover walls 40, 42 could be temporarily detached from each other to facilitate insertion and removal of the frame 38. This could be achieved by fastening these portions of the outer and inner cover walls 40, 42 using non-permanent fasteners such as touch fastener elements for example.

The slipcover 36 is made from an opaque or translucent material to provide some privacy to the passenger sitting in the seat 12. However, it is contemplated that the slipcover 36 could be made of transparent material. The slipcover 36 is made of flexible material. In the present embodiment, the slipcover is made of medical grade non-woven textile. Examples of such textiles include, but are not limited to, polypropylene, polyester-rayon, glass fibre, and cellulose. It is contemplated that the slipcover 36 could be made of plastic, such as polyethylene, or composite material. Other materials are contemplated. The material used is also relatively light to keep the weight of the partition 30 relatively low. In some embodiments, the textile used has a density in the range of 20 g/m² to 90 g/m ². Depending on the type of material used, after the partition 30 has been used the slipcover 36 can be removed from its frame 38 to be disposed of, recycled or cleaned, thus simplifying maintenance compared to the type of permanently fixed partitions described in the above background section.

As can be seen in Figure 3, the frame 38 is received inside the slipcover 36 between the outer and inner cover walls 40, 42. The frame 38 inserted and removed from the slipcover 36 via the opening defined at the rear edge 32. The frame 38 supports the slipcover 36 and gives it structure. As can be seen, the shape of the slipcover 36 generally corresponds to the shape of the frame 38.

As best seen in Figure 4, the frame 38 has a frame member 44, a frame member 46, an elbow fitting 48 and an elbow fitting 50. The frame member 44 and the frame member 46 are rods 44, 46 made of flexible material, such as, but not limited to, plastic, wood or composite fibre. It is contemplated that the rod 44 could be made from rigid material in some embodiments. It is also contemplated that the frame members 44, 46 could be structural elements other than rods. The elbow fittings 48, 50 have tubular sections adapted to receive the ends of the rods 44, 46 therein. The rod 44 extends generally vertically. The elbow fitting 48 is connected to an upper end of the rod 44. The elbow fitting 50 is connected to a lower end of the rod 44. Prior to being assembled to form the frame 38, the rod 46 is straight. The rod 46 has one end connected to one of the elbow fittings 48, 50 and is bent to have its other end connected to the other one of the elbow fittings 48, 50. As a result, the rod 46 is curved in the shape shown and extends forward of the rod 44. It is contemplated that the rod 46 could be formed to generally have the shape shown in Figure 4 so that it does not have to be bent when assembling the frame 38. As can be seen, the frame 38 forms a closed perimeter.

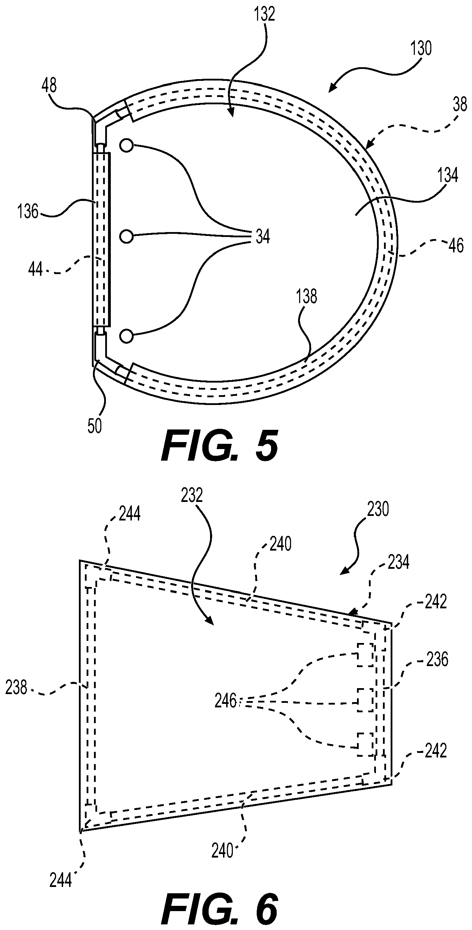

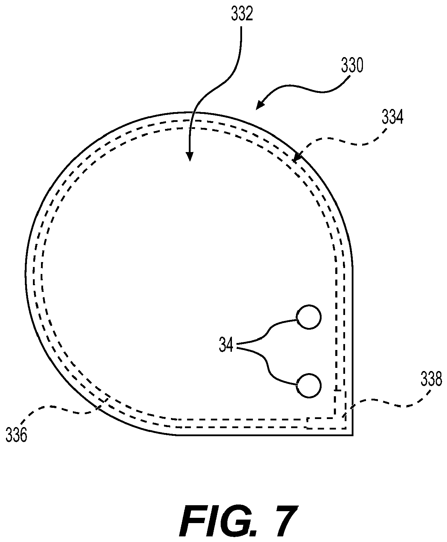

The elbow fittings 48, 50 allow for easy assembly and disassembly of the frame 38. When disassembled, depending on the material they are made of, the components 44, 46, 48, 50 of the frame 38 can be disposed of, recycled or cleaned, thus simplifying maintenance compared to the type of permanently fixed partitions described in the above background section. It is contemplated that the rods 44, 46 could be connected to each other by components other than the elbow fittings 48, 50. It is contemplated that the frame 38 could be made from more or less frame members and elbow fittings, and that the resulting frame could have a shape different from that of the frame 38 shown in Figure 3. Two such alternative embodiments will be described below with reference to Figures 6 and 7. It is contemplated that the frame could be a single part generally having the shape of the frame 38 and being sufficiently flexible to be inserted and removed from the slipcover 36 via the opening defined at the rear edge 32. Such a part could be molded plastic or made by an additive manufacturing process.

In the present embodiment, the rod 44 has a length of about 34 centimeters, the rod 46 has a length (unbent) of about 125 centimeters, and the tubular sections of the elbow fittings 48, 50 are disposed at an angle A of 120 degrees from each other. Other dimensions and angles are contemplated which would result in different shapes and dimensions of the resulting partition. As can be seen with reference to Figure 3, the partition 30 has a straight rear edge and a curved body that forms a generally D-shape that is symmetrical about a horizontal axis. A height of the partition 30 initially increases as one moves from the rear edge 32 to about the longitudinal center of the partition 30 and then decreases as one moves from about the longitudinal center of the partition 30 to the front of the partition 30. The partition 30 has a maximum height HI near its longitudinal center about 45 centimeters and a height H2 at its rear edge 32 of about 35 centimeters. The partition 30 has a length L of about 50 centimeters. As previously mentioned, it is contemplated that the partition 30 could have a different shape and/or have different dimensions.

As previously mentioned, the partition 30 has three toolless fasteners 34, which in the present embodiment are female snap fastener elements 34. The snap fastener elements 34 are provided on the slipcover 36 forward of the rod 44 near the rear edge 32 such that the snap fastener elements are located within the closed perimeter defined by the frame 38. The snap fastener elements 34 pass through both the outer and inner cover walls 40, 42 and attach them together. The snap fastener elements 34 are disposed in line about a generally vertical line. The snap fastener elements 34 include a lower snap fastener element 34A, a central snap fastener element 34B disposed above the snap fastener element 34A, and an upper snap fastener element 34C disposed above the snap fastener element 34B. The central snap fastener element 34B is disposed generally at the vertical center of the partition 30 and the lower and upper snap fastener elements 34A, 34C are disposed equidistant from the central snap fastener element 34B. In the present embodiment, the distance D from the center of the central snap fastener element 34B to the center of either one of the snap fastener elements 34A, 34C is about 16 centimeters, but other dimensions are contemplated.

To fasten the partition 30 to the left side of the passenger seat 12, the lower and central snap fastener elements 34A, 34B are fastened to the snap fastener elements 22 provided on the left side of the backrest 16. The upper snap fastener element 34C remains unfastened.

To fasten the partition 30 to the right side of the passenger seat 12, the partition is first flipped over from what is shown in Figures 1 and 3 such that the snap fastener element 34C becomes the lower snap fastener element and the snap fastener element 34A becomes the upper snap fastener element. The snap fastener elements 34C, 34B are then fastened to the snap fastener elements 22 provided on the right side of the backrest 16. The snap fastener element 34A, which is now at the top, remains unfastened.

It is contemplated that only two or more than three snap fasteners elements 34 could be provided, in which case a different number of snap fastener elements 22 may be provided on the side of the backrest 16. As discussed above, it is contemplated that other types of toolless fasteners could be used instead of the snap fastener elements 34, such as the previously mentioned touch fastener elements. In another example, the partition 30 could be clipped to the side of the backrest 16. In yet another example, the side of the backrest 16 could be provided with buttons that are received in button-holes defined in the cover 36, in which case the button-holes would be considered toolless fasteners. In yet another example, magnets could be provided on the side of the backrest 16 and metallic plates could be provided with metal plates that would magnetically connect to the magnets. Alternatively, the rod 44 of the frame 38 could be made of metal that could magnetically connect to the magnets provided on the side of the backrest 16, in which case the rod 44 would be considered a toolless fastener. It is contemplated that for some type of toolless fasteners, such as the touch fastener elements, a single toolless fastener could be used to fasten the partition 30 to the side of the backrest 16. It is also contemplated that the toolless fasteners 34 could be of different types. For example, the middle toolless fastener 34B could be a snap fastener element and the lower and uppers toolless fasteners 34A, 34C could be touch fastener elements.

To help in pulling the partition 30 off from the seat 12 when removing the partition 30 from the seat 12, a loop 52 is connected to a rear portion of the slipcover 36. The loop 52 is made from the same material as the slipcover 36 and is fastened to the slipcover 36 by the central snap fastener element 34B. It is contemplated that the loop 52 could be made from a different material. It is also contemplated that the loop 52 could be connected to the slipcover 36 by other means, such as by sewing for example. It is contemplated that the loop 52 could be omitted.

Turning now to Figures 5 to 7, partitions 130, 230 and 330 that are alternative embodiments of the partition 30 will be described. The types of materials used for the various components of these partitions 130, 230, 330 are the same as those used in the partition 30 described above or any of the above-mentioned alternatives. As such, these will not be repeated below. Also, components of the partitions 130, 230, 330 described below that are similar to those described above with respect to the partition 30 may have the same features and alternatives as those of the components described above with respect to the partition 30. As such, these will also not be repeated below.

As with the partition 30, each of the partitions 130, 230, 330 will be described herein with respect to its orientation when fastened to the left side of the passenger seat 12. It should be understood that when fastened to the right side of the passenger seat 12, the partitions 130, 230, 330 would appear as mirror images of the partitions 130, 230, 330 as illustrated in Figures 5 to 7.

Figure 5 illustrates a partition 130. The partition 130 has a cover 132 and the frame 38. As the frame 38 is identical to the frame 38 of the partition 30 it will not be described again. The cover 132 has a cover wall 134, a sleeve 136 and a sleeve 138. As can be seen, the sleeves 136, 138 are disposed along the periphery of the rear portion and the curved portion of the cover wall 134 respectively. In the present embodiment, the sleeves 136, 138 are formed by folding over flaps that extend from the cover wall 134 and by attaching the inner edges of these flaps to the cover wall 134 by sewing, welding, gluing or by other means. It is also contemplated that the sleeves 134 could be formed parts that are connected along their inner and outer edges to the cover wall 134. In the present embodiment, the sleeves 136, 138 are on the side of the partition 130 facing the passenger sitting in the passenger seat 12, but it is contemplated that they could be on the other side of the partition 130. It is contemplated that the cover 132 could have a single sleeve or more than two sleeves.

The rod 44 of the frame 38 is received in the sleeve 136. The rod 46 of the frame 38 is received in the sleeve 138. As can be seen, the elbow fittings 48, 50 are not covered by the sleeves 136, 138. This facilitates the connection and disconnection between the rods 44, 46 and the elbow fittings 48, 50.

As in the partition 30, the partition 130 is provided with three snap fastener elements 34, but other types of toolless fasteners and a different number of toolless fasteners are contemplated.

Figure 6 illustrates a partition 230. The partition 230 has a cover 232 and a frame 234 received inside the cover 232. The frame 234 has a trapezoidal shape. The cover 232 is a slipcover similar to the slipcover 36 described above but having a trapezoidal shape to match the shape of the frame 234. It is contemplated that the cover 232 could alternatively be a cover having sleeves similar to the cover 132 described above but having a trapezoidal shape to match the shape of the frame 234 and having a number of sleeves suitable to support the cover 232 on the frame 234.

The frame 234 has a short rear rod 236, a long front rod 238, and two diagonal rods 240. The rear rod 236 is connected to the diagonal rods 240 by elbow fittings 242 defining obtuse angles. The front rod 238 is connected to the diagonal rods 240 by elbow fittings 244 defining acute angles.

The partition 230 is provided with three toolless fasteners 246 in the form of touch fastener elements 246 provided on the inner cover wall of the cover 232. Accordingly, the side of the backrest 16 is provided with two corresponding touch fastener elements for fastening to the lower and central touch fastener elements 246 of the partition 230. It is contemplated that there could be more or less than three touch fastener elements 246. It is also contemplated that the touch fastener elements 246 could be replaced by snap fastener elements or any other alternative toolless fasteners described above.

Figure 7 illustrates a partition 330. The partition 330 has a cover 332 and a frame 334 received inside the cover 332. The cover 332 is a slipcover similar to the slipcover 36 described above but having a shape to match the shape of the frame 334. It is contemplated that the cover 332 could alternatively be a cover having sleeves similar to the cover 132 described above but having a shape to match the shape of the frame 334 and having a number of sleeves suitable to support the cover 332 on the frame 334.

The frame 334 has a single rod 336 and a single ninety-degree elbow fitting 338. The rod 336 is bent as shown such that both of its ends are connected to the elbow fitting 388 to form a generally tear-drop shape.

The partition 330 is provided with two snap fastener elements 34, but other types of toolless fasteners and a different number of toolless fasteners are contemplated.

Modifications and improvements to the above-described embodiments of the present technology may become apparent to those skilled in the art. The foregoing description is intended to be exemplary rather than limiting. The scope of the present technology is therefore intended to be limited solely by the scope of the appended claims.

## Claims

1. A partition for a seat of a mass transportation vehicle, the seat having:
a seat bottom; and
a backrest connected to the seat bottom,
the partition comprising:
a frame;
a cover made of flexible material, the cover being supported by the frame, the frame being disposed at least in part in the cover; and
at least one toolless fastener provided on the cover, the at least one toolless fastener being adapted for selectively fastening the partition to an upper portion of a lateral side of the backrest.

2. The partition of claim 1, wherein the at least one toolless fastener is at least two toolless fasteners disposed generally in a line, the line being generally vertical.

3. The partition of claim 2, wherein:
the at least two toolless fasteners are three toolless fasteners;
the three toolless fasteners being a lower fastener, a central fastener disposed above the lower fastener, and an upper fastener disposed above the central fastener; and
only the lower and central fasteners are used for fastening the partition to the upper portion of the lateral side of the backrest of the seat.

4. The partition of any one of claims 1 to 3, wherein the frame forms a closed perimeter.

5. The partition of claim 4, wherein the at least one toolless fastener is located within the closed perimeter defined by the frame.

6. The partition of claim 4 or 5, wherein the frame comprises at least one frame member connected to at least one elbow fitting.

7. The partition of claim 6, wherein:
the at least one frame member comprises a first frame member and a second frame member, at least the second frame member of the first and second frame members is flexible;
the at least one elbow fitting comprises a first elbow fitting and a second elbow fitting;
the first flexible frame member extends generally vertically;
the first elbow fitting is connected to an upper end of the first flexible frame member;
the second elbow fitting is connected to a lower end of the first flexible frame member;
the second flexible frame member is curved, has a first end connected to the first elbow fitting and a second end connected to the second elbow fitting, and extends forward of the first flexible member.

8. The partition of any one of claims 1 to 7, wherein the at least one toolless fastener is selected from:
a snap fastener element adapted for fastening to a corresponding snap fastener element provided on the upper portion of the lateral side of the backrest of the seat; and
a touch fastener element adapted for fastening to a corresponding touch fastener element provided on the upper portion of the lateral side of the backrest of the seat.

9. The partition of any one of claims 1 to 8, wherein:
the cover is a slipcover defined by an outer cover wall and an inner cover wall; and
the frame being received inside the slipcover between the outer and inner cover walls.

10. The partition of any one of claims 1 to 8, wherein:
the cover has a cover wall and at least one sleeve along at least a portion of a periphery of the cover wall; and
the frame is received at least in part inside the at least one sleeve.

11. The partition of any one of claims 1 to 10, wherein a height of the partition at a rear edge of the cover is smaller than a height of portions of the partition disposed forward of the rear edge.

12. The partition of any one of claims 1 to 11, wherein the cover is made of medical grade non-woven textile.

13. The partition of any one of claims 1 to 12, further comprising a loop connected to a rear portion of the cover for pulling the partition off of the seat when removing the partition from the seat.

14. A seat assembly comprising:
the partition of any one of claims 1 to 13, the at least one toolless fastener being at least one first toolless fastener; and
a seat comprising:
a seat bottom;
a backrest connected to the seat bottom; and
at least one second toolless fastener connected to an upper portion of a lateral side of the backrest,
at least one of the at least one first toolless fastener being selectively fastened to the at least one second toolless fastener, and
the partition extending forward of the backrest.

15. The seat assembly of claim 14, wherein the partition is configured for being fastened to either one of a left side of the seat and a right side of the seat.
